# EUROPEAN PATENT SPECIFICATION

(11) **EP 3 064 727 B1**
(45) Date of publication and mention of the grant of the patent: **14.06.2017**
(21) Application number: 16157424.9
(22) Date of filing: 25.02.2016
(51) Int. Cl.: F01N 3/20, F01N 3/10, F01N 13/00

(54) **EXHAUST GAS PURIFICATION DEVICE**
ABGASREINIGUNGSVORRICHTUNG
DISPOSITIF DE PURIFICATION DE GAZ D'ÉCHAPPEMENT

(30) Priority: 02.03.2015 JP 2015040421
(43) Date of publication of application: 07.09.2016
(73) Proprietor: Toyota Jidosha Kabushiki Kaisha, Toyota-shi, Aichi 471-8571 (JP)
(72) Inventor: OTA, Hirohiko, Aichi-Ken Aichi 471-8571 (JP)
(74) Representative: D Young & Co LLP

(56) References cited:
- JP-A- 2007 051 594
- US-A1- 2011 056 188

## Description

### BACKGROUND OF THE INVENTION

The present invention relates to an exhaust gas purification device that removes nitrogen oxides from the exhaust gas by performing selective catalytic reduction using ammonia as a reducing agent to purify the exhaust gas.

Japanese Laid-Open Patent Publication No. 2007-051594 describes an exhaust gas purification device arranged in an exhaust passage of a diesel engine and including a urea adding valve, a selective catalytic reduction unit, and an oxidation catalytic unit. The urea adding valve adds aqueous urea, which is a solution of urea that is the precursor of ammonia, to the exhaust gas flowing through an exhaust passage. The selective catalytic reduction unit is located at the downstream side of the urea adding valve in the exhaust passage to purify the exhaust gas by reducing nitrogen oxides (NOx) included in the exhaust gas using ammonia, which is generated from the urea in the added aqueous urea, as a reducing agent. The oxidation catalytic unit is located at the downstream side of the selective catalytic reduction unit in the exhaust passage to oxidize the ammonia from the selective catalytic reduction unit and decompose the ammonia to harmless water and nitrogen. This limits the release of ammonia into the ambient air.

Further, the exhaust gas purification device of the above publication executes aqueous urea addition control to add aqueous urea to the exhaust gas when the selective catalytic reduction unit needs to be cooled. This cools the exhaust gas that flows into the selective catalytic reduction unit with the latent heat of vaporization of the aqueous urea. The addition amount of the aqueous urea is set so that the amount of ammonia generated from the aqueous urea is less than or equal to the total amount of the ammonia used to reduce nitrogen oxides and the ammonia that can be oxidized by the oxidation catalytic unit. This cools the exhaust gas, while limiting the release of ammonia.

US 2011/0056188 A1 discloses another exhaust purification apparatus comprising an urea aqueous solution addition valve, a NOx catalyst and a downstream ammonia oxidation catalyst using the output of NOx sensors to correct the added amount of urea aqueous solution in a predetermined high temperature range of the NOx catalyst bed. The oxidation catalytic unit becomes active when the bed temperature of the oxidation catalyst supported by the oxidation catalytic unit is greater than or equal to an activation temperature. In this case, due to the reaction expressed by equation (1), the active oxidation catalytic unit oxidizes the ammonia from the selective reduction catalytic unit and decomposes the ammonia to water and nitrogen. When the bed temperature of the oxidation catalytic unit becomes higher than or equal to a predetermined temperature that is higher than the activation temperature, the reactions expressed by equations (2) to (4) results in the oxidation catalytic unit generating NOx components from ammonia. Thus, the oxidation catalytic unit reproduces NOx and increases the amount of NOx released into the ambient air.

*2NH*₃ + 3/2*O*₂ → *N*₂ + 3*H*₂*O* ··· (1)

2*NH*₃ + 5/2*O*₂ → 2*NO* + 3*H*₂*O* ··· (2)

2*NH*₃ + 7/2*O*₂ → 2*NO*₂ + 3*H*₂*O* ··· (3)

2*NH*₃ + 2*O*₂ → *N*₂*O* + 3*H*₂*O* ··· (4)

Under such a situation, the aqueous urea addition control may be executed to cool the exhaust gas flowing into the oxidation catalytic unit. This lowers the bed temperature of the catalytic unit and limits increases in the amount of reproduced NOx that is released into the ambient air. However, the execution of the aqueous urea addition control when the oxidation catalytic unit is not reproducing NOx will only result in the excessive addition of the aqueous urea and increase the released amount of the ammonia. In such a case, the released amount of NOx will barely decrease.

### SUMMARY OF THE INVENTION

It is an object of the present invention to provide an exhaust gas purification device that further properly limits increases in the released amount of NOx when NOx is reproduced.

One aspect of the present invention is an exhaust gas purification device including an adding valve that is located in an exhaust passage of an internal combustion engine and adds a solution of a precursor of ammonia to exhaust gas, a selective catalytic reduction unit that reduces nitrogen oxides in the exhaust gas using ammonia generated from the solution as a reducing agent, an oxidation catalytic unit that oxidizes the ammonia exiting the selective catalytic reduction unit, and an addition amount control unit configured to control an addition amount of the solution of the adding valve. The adding valve, the selective catalytic reduction unit, and the oxidation catalytic unit are arranged in this order from an upstream side of the exhaust passage. The amount of nitrogen oxides in the exhaust gas entering the selective catalytic reduction unit is referred to as an entering NOx amount. The amount of nitrogen oxides exiting the oxidation catalytic unit is referred to as the exiting NOx amount. The addition amount control unit is configured so that when the exiting NOx amount of the oxidation catalytic unit is greater than the entering NOx amount of the selective catalytic reduction unit, the addition amount control unit executes an increasing process that increases the addition amount of the solution as compared with when the exiting NOx amount of the oxidation catalytic unit is less than or equal to the entering NOx amount of the selective catalytic reduction unit.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram showing the structure of an intake-exhaust system for a diesel engine to which a first embodiment of an exhaust gas purification device is applied;
Fig. 2 is a graph showing the relationship of the bed temperature of a catalyst in an ASC unit arranged in the exhaust gas purification device and the exiting NOx amount;
Fig. 3 is a flowchart of an aqueous urea addition amount calculation routine executed by the exhaust gas purification device;
Fig. 4 is a graph showing the relationship of an increasing correction amount, which is calculated in the aqueous urea addition mount calculation routine, and the bed temperature of the catalyst in the ASC unit;
Fig. 5 is a flowchart of an aqueous urea addition amount calculation routine executed by a second embodiment of the exhaust gas purification device; and
Fig. 6 is a flowchart of an aqueous urea addition amount calculation routine executed by a third embodiment of the exhaust gas purification device.

### DETAILED DESCRIPTION OF THE PREFERRED EMBODIMENTS

### First Embodiment

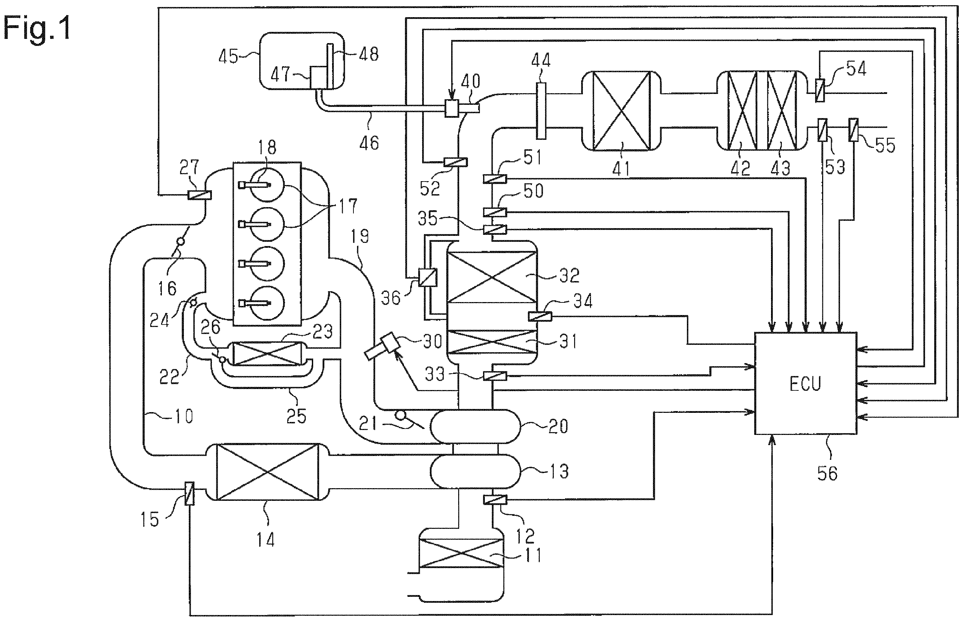

A first embodiment of an exhaust gas purification device will now be described in detail with reference to Figs. 1 to 4. In the present embodiment, the exhaust gas purification device is applied to a diesel engine installed in a vehicle.

As shown in Fig. 1, the diesel engine includes an intake passage 10. In order from the upstream side, the intake passage 10 includes an air cleaner 11, an airflow meter 12, a compressor 13, an intercooler 14, an I/C downstream gas temperature sensor 15, a throttle valve 16, and an intake air pressure sensor 27. The air cleaner 11 removes impurities from the intake air, and the airflow meter 12 detects the amount of intake air (intake air amount) flowing through the intake passage 10. The compressor 13 pressurizes the intake air when driven, and the intercooler 14 cools the intake air from the compressor 13. The I/C downstream gas temperature sensor 15 detects the temperature of the intake air from the intercooler 14, and the open amount of the throttle valve 16 is changed to adjust the intake air amount. The intake air pressure sensor 27 detects the pressure of the intake air at the downstream side of the throttle valve 16 in the intake passage 10.

The portion of the intake passage 10 at the downstream side of the throttle valve 16 is connected to cylinders 17 of the diesel engine. Each cylinder 17 includes an injector 18 that injects fuel. In each cylinder 17, the intake air drawn from the intake passage 10 and the fuel injected from the injector 18 is mixed and burned.

The combustion that occurs in each cylinder 17 generates exhaust gas that flows through an exhaust passage 19 and is released into the ambient air. The exhaust passage 19 includes a turbine 20. The turbine 20 and the compressor 13, which is located in the intake passage 10, form an exhaust gas turbine supercharger. The turbine 20, which is rotated by the exhaust gas flowing through the exhaust passage 19, drives the compressor 13. The portion of the exhaust passage 19 at the upstream side of the turbine 20 includes a variable nozzle 21, which varies the area of an exhaust gas port open to the turbine 20. The open amount of the variable nozzle 21 is regulated to adjust the rotation speed of the turbine.

The diesel engine includes an exhaust gas recirculation (EGR) device that recirculates a portion of the exhaust gas to the intake air. The EGR device includes an EGR passage 22, an EGR cooler 23, and an EGR valve 24. The portion of the exhaust passage 19 at the upstream side of the turbine 20 and the portion of the intake passage 10 at the downstream side of the throttle valve 16 are in communication through the EGR passage 22. The EGR cooler 23 cools the exhaust gas (EGR gas) recirculated to the intake air through the EGR passage 22. The EGR valve 24 regulates the flowrate of the EGR gas. Further, the EGR device includes a bypass 25 and a bypass valve 26. The bypass 25 diverts the flow of EGR gas around the EGR cooler 23. The bypass valve 26 regulates the flowrate of the EGR gas that flows through the bypass 25 around the EGR cooler 23.

The structure of the exhaust gas purification device applied to the diesel engine in the present embodiment will now be described. The exhaust gas purification device includes a diesel particulate filter (DPF) system, which removes particulate matter (PM) from the exhaust gas, and a urea selective catalytic reduction (SCR) system, which performs selective reduction using aqueous urea as a reducing agent to remove NOx from the exhaust gas and purify the exhaust gas.

The DPF system includes a fuel adding valve 30, a pre-oxidation catalytic unit 31, and a PM capturing filter 32. The fuel adding valve 30 is located in the exhaust passage 19 at the upstream side of the turbine 20. The pre-oxidation catalytic unit 31 is located in the exhaust passage 19 between the turbine 20 and the PM capturing filter 32. The fuel adding valve 30 adds fuel to the exhaust gas, and the PM capturing filter 32 captures and removes PM from the exhaust gas. The pre-oxidation catalytic unit 31 oxidizes soluble organic fraction (SOF) components in the PM. Further, the pre-oxidation catalytic unit 31 oxidizes nitrogen monoxide (NO) in the exhaust gas and generates nitrogen dioxide (NO₂) used for continuous regeneration of the PM capturing filter 32. The pre-oxidation catalytic unit 31 forcibly regenerates the PM capturing filter 32, oxidizes hydrocarbon (HC) in the fuel added by the fuel adding valve 30, and uses the heat generated by the oxidation reaction to raise the temperature of the exhaust gas. Thus, the pre-oxidation catalytic unit 31 functions to raise the temperature of the PM capturing filter 32 in order to burn PM.

Further, the DPF system includes sensors used to detect the exhaust gas condition in different portions of the system. A DPF upstream temperature sensor 33 is arranged in the exhaust passage 19 at a portion located at the upstream side of the pre-oxidation catalytic unit 31 to detect the temperature of the exhaust gas flowing into the pre-oxidation catalytic unit 31. A DPF intermediate temperature sensor 34 is arranged in the exhaust passage 19 at a portion located between the pre-oxidation catalytic unit 31 and the PM capturing filter 32 to detect the temperature of the exhaust gas flowing into the PM capturing filter 32. Further, a DPF downstream temperature sensor 35 is arranged in the exhaust passage 19 at a portion located at the downstream side of the PM capturing filter 32 to detect the temperature of the exhaust gas flowing out of the PM capturing filter 32. In addition, a differential pressure sensor 36 is arranged in the exhaust passage 19 at a portion where the PM capturing filter 32 is located to detect the pressure difference between the front and rear of the PM capturing filter 32.

The urea SCR system includes a urea adding valve 40, two SCR units, namely, a front SCR unit 41 and a rear SCR unit 42, and an ammonia slip catalytic (ASC) unit 43. The urea adding valve 40 is arranged in the exhaust passage 19 at a portion located at the downstream side of the PM capturing filter 32 to add aqueous urea, which is a solution of the precursor of ammonia, to the exhaust gas. The front SCR unit 41 and the rear SCR unit 42 are selective catalytic reduction units that reduce nitrogen oxides in the exhaust gas with ammonia, which serves as a reducing agent. The ammonia is generated from the urea in the added aqueous urea through hydrolysis caused by the heat of the exhaust gas. The front SCR unit 41 is arranged in the exhaust passage 19 at a portion located at the downstream side of the urea adding valve 40. The rear SCR unit 42 is arranged in the exhaust passage 19 at a portion located at the downstream side of the front SCR unit 41. The ASC unit 43 is an oxidation catalytic unit that oxidizes the ammonia released from the front SCR unit 41 and the rear SCR unit 42. A diffusion plate 44 is arranged in the exhaust passage 19 at a portion between the urea adding valve 40 and the front SCR unit 41 to diffuse the aqueous urea added by the urea adding valve in the exhaust gas.

The aqueous urea added to the exhaust gas by the urea adding valve 40 is stored in an aqueous urea tank 45. The aqueous urea tank 45 is connected to the urea adding valve 40 through a pipe 46 that includes a heater. A feed pump 47 is arranged in the aqueous urea tank 45. The feed pump 47 draws in aqueous urea and feeds the aqueous urea to the urea adding valve 40 through the pipe 46. The aqueous urea tank 45 includes an aqueous urea level sensor 48 to detect the remainder of the aqueous urea in the aqueous urea tank 45.

Further, the urea SCR system includes sensors used to detect the exhaust gas condition in different portions of the system. An SCR upstream NOx sensor 50, an air-fuel ratio sensor 51, and an exhaust gas pressure sensor 52 are arranged in the exhaust passage 19 at a portion between the PM capturing filter 32 and the urea adding valve 40. The SCR upstream NOx sensor 50 detects the amount of NOx in the exhaust gas that flows into the front SCR unit 41 (hereinafter, referred to as the entering NOx amount FrNOx). The air-fuel ratio sensor 51 generates an output that is in accordance with the difference in the partial pressure of oxygen between the exhaust gas and a reference gas (e.g., atmosphere). The output is used to obtain the air-fuel ratio of the air-fuel mixture burned in the cylinders 17. Further, the exhaust gas pressure sensor 52 detects the pressure of the exhaust gas in the portion of the exhaust passage 19 where the exhaust gas pressure sensor 52 is located. An SCR downstream NOx sensor 53, an ASC downstream temperature sensor 54, and a PM sensor 55 are arranged in the exhaust passage 19 at a portion located at the downstream side of the ASC unit 43. The SCR downstream NOx sensor 53 detects the amount of NOx in the exhaust gas that flows out of the ASC unit 43 (hereinafter, referred to as the exiting NOx amount RrNOx). The ASC downstream temperature sensor 54 detects the temperature of the exhaust gas flowing out of the ASC unit 43 (hereinafter, referred to as the ASC downstream gas temperature Tasc). Further, the PM sensor 55 detects the amount of PM released from the ASC unit 43 into the ambient air.

In the exhaust gas purification device, an electronic control unit (ECU) 56 controls the fuel added by the fuel adding valve 30 and the aqueous urea added by the urea adding valve 40. The ECU 56 includes a central processing unit that performs calculations used to execute controls, a read-only memory that stores control program and data, a readable memory that temporarily stores calculation results of the central processing unit and detection results of sensors, input ports that receive signals from external devices, and output ports that transmit signals to external devices. The ECU 56 is a control circuit or a processor. The input ports of the ECU 56 are connected to the above sensors and the output ports of the ECU 56 are connected to the fuel adding valve 30 and the urea adding valve 40. The ECU 56 drives and controls the fuel adding valve 30 and the urea adding valve 40 to control the amount of fuel and ammonia added to the exhaust gas. In this manner, in the exhaust gas purification device of the present embodiment, the ECU 56 corresponds to an addition amount control unit.

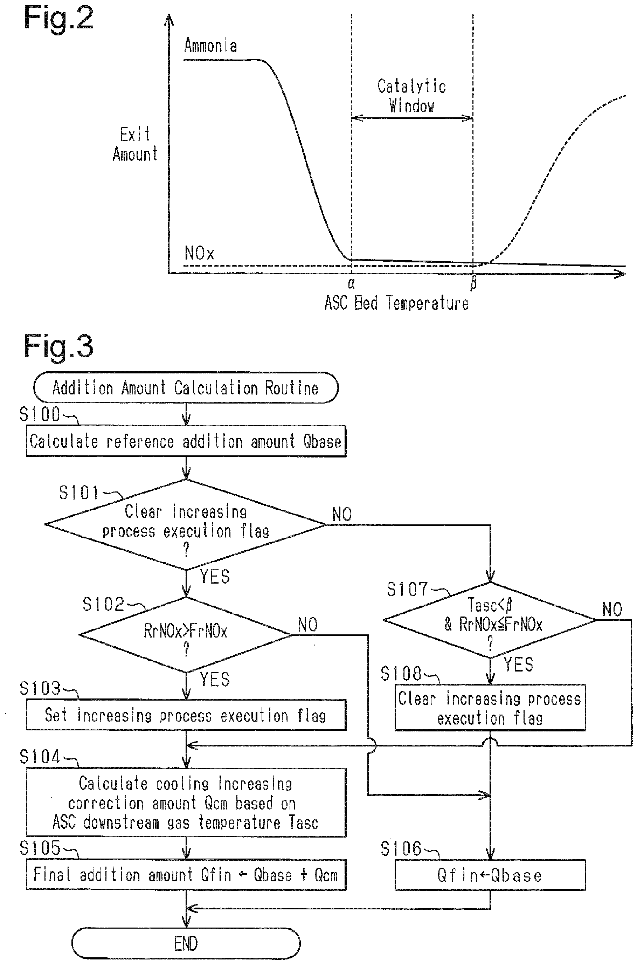

Fig. 2 shows the relationship of the bed temperature of the oxidation catalyst supported by the ASC unit 43 (hereinafter referred to as the ASC bed temperature) and the amounts of ammonia and NOx that exit the ASC unit 43 when a constant amount of ammonia enters the ASC unit 43. The ASC unit 43 becomes active and oxidizes ammonia when the ASC bed temperature rises to temperature α or higher so that the ammonia is decomposed to harmless water and nitrogen. When the ASC bed temperature further rises and exceeds temperature β, the ASC unit 43 becomes overactive and further oxidizes ammonia. This results in the generation of NOx components. Thus, as shown in Fig. 2, when the ASC temperature is higher than or equal to temperature α, the amount of ammonia exiting the ASC unit 43 can be reduced. However, when the ASC temperature exceeds temperature β, the amount of ammonia exiting the ASC unit 43 cannot be reduced. Moreover, the amount of NOx exiting the ASC unit 43 increases. In the description hereafter, temperature α is referred to as the activation temperature of the ASC unit 43, and temperature β is referred to the NOx reproduction initiation temperature of the ASC unit 43. When the ASC bed temperature is in the range from the activation temperature α to the NOx reproduction initiation temperature β, the release of both ammonia and NOx into the ambient air is reduced in a favorable manner. The temperature range from the activation temperature α to the NOx reproduction initiation temperature β is referred to as the catalytic window of the ASC unit 43.

The temperature of the exhaust gas flowing through the ASC unit 43 is high when the diesel engine is operating under a high load at a high rotation speed or when the PM capturing filter 32 is being forcibly regenerated. As a result, the ASC downstream gas temperature Tasc will exceed the NOx reproduction temperature β. In such a case, even when the front SCR unit 41 and the rear SCR unit 42 sufficiently remove the NOx generated by the combustion performed in the diesel engine, the ASC unit 43 generates reproduced NOx. Thus, the amount of NOx released into the ambient air cannot be sufficiently reduced. In the exhaust gas purification device of the present embodiment, an aqueous urea addition amount increasing process is performed to limit increases in the amount of reproduced NOx that is released into the ambient air.

Fig. 3 is a flowchart of an aqueous urea addition amount calculation routine executed by the ECU 56 to determine the amount of the aqueous urea that the urea adding valve 40 adds to the exhaust gas. The ECU 56 repetitively performs this routine in specified control cycles when the diesel engine is operating. The increasing process described above is performed as part of this routine.

When the processing of the routine starts, in step S100, the ECU 56 calculates a reference addition amount Qbase. The reference addition amount Qbase is the amount of aqueous urea added to the exhaust gas in order to reduce NOx and purify the exhaust gas with the front SCR unit 41 and the rear SCR unit 42. Further, the reference addition amount Qbase is set in accordance with the present adsorption capacity (maximum ammonia adsorption amount) of the front SCR unit 41 and the rear SCR unit 42. More specifically, when calculating the reference addition amount Qbase, a target ammonia adsorption amount, an estimated ammonia adsorption amount, and an ammonia consumption amount are obtained. Further, the reference addition amount Qbase is calculated so that the ammonia generated from the aqueous urea added to the exhaust gas corresponds to a value obtained by subtracting the estimated ammonia adsorption amount from the target ammonia adsorption amount and adding the ammonia consumption amount to the difference.

The target ammonia adsorption amount is a target value of the amount of ammonia that is to be adsorbed by the front SCR unit 41 and the rear SCR unit 42. Further, the target ammonia adsorption amount is set in accordance with the present total ammonia adsorption capacity of the front SCR unit 41 and the rear SCR unit 42. The ammonia adsorption capacity (maximum ammonia adsorption amount) of the front SCR unit 41 and the rear SCR unit 42 is changed by the bed temperature of the catalyst supported by the SCR units 41 and 42 and basically decreases as the bed temperature becomes lower. Thus, the target ammonia adsorption amount is obtained from the bed temperature of the catalyst in each of the front SCR unit 41 and the rear SCR unit 42. The amount of heat generated during the NOx reduction reaction is estimated from the temperature of the exhaust gas entering the front SCR unit 41 detected by the DPF downstream temperature sensor 35, the entering NOx amount of the front SCR unit 41 detected by the SCR upstream NOx sensor 50, and the addition situation of the aqueous urea. The bed temperatures of the catalysts in the front SCR unit 41 and the rear SCR unit 42 are each estimated based on the amount of heat generated during the NOx reduction reaction.

The ammonia consumption amount is the amount of ammonia consumed by the front SCR unit 41 and the rear SCR unit 42 to reduce NOx and purify the exhaust gas. Further, the ammonia consumption amount is obtained from the amount of NOx entering the front SCR unit 41 detected by the SCR upstream NOx sensor 50 and the bed temperatures of the catalysts in the front SCR unit 41 and the rear SCR unit 42.

The estimated ammonia adsorption amount is an estimated amount of the ammonia adsorbed in the front SCR unit 41 and the rear SCR unit 42. The value of the estimated ammonia adsorption amount is obtained by cumulating values obtained by subtracting the ammonia consumption amount and an ammonia slip amount from the amount of ammonia generated from the added aqueous urea (ammonia addition amount). The ammonia slip amount is the amount of ammonia exiting the rear SCR unit 42. When a value obtained by subtracting the maximum ammonia adsorption amount and the ammonia consumption amount from the sum of the ammonia addition amount and the estimated ammonia adsorption amount is "0" or less, the ammonia slip amount is set to "0." When the value exceeds "0," the ammonia slip amount is set to that value.

In step S101, the ECU 56 determines whether or not an increasing process execution flag is clear. As will be described later, the increasing process execution flag is set when starting the process for increasing the aqueous urea addition amount and cleared when stopping the increasing process.

When the increasing process is not performed and the increasing process execution flag is clear (S101: YES), the ECU 56 proceeds to step S102. In step S102, the ECU 56 determines whether or not the exiting NOx amount RrNOx detected by the SCR downstream NOx sensor 53 is greater than the entering NOx amount FrNOx detected by the SCR upstream NOx sensor 50. When the exiting NOx amount RrNOx is greater than the entering NOx amount FrNOx (YES), the ECU 56 proceeds to step S103. When the exiting NOx amount RrNOx is not greater than the entering NOx amount FrNOx (NO), the ECU 56 proceeds to step S106.

When the exiting NOx amount RrNOx is greater than the entering NOx amount FrNOx, the ECU 56 proceeds to step S103 and sets the increasing process execution flag to start the increasing process. Then, the ECU 56 proceeds to step S104. In step S104, the ECU 56 calculates a cooling increasing correction amount Qcm based on the ASC downstream gas temperature Tasc. In step S105, the ECU 56 sets a final addition amount Qfin to a value obtained by adding the cooling increasing correction amount Qcm to the reference addition amount Qbase. Then, the present cycle of the routine ends.

When the exiting NOx amount RrNOx is not greater than the entering NOx amount FrNOx, the reference addition amount Qbase is set to a final addition amount Qfin. Then, the present cycle of the routine ends.

When the increasing process execution flag is set during execution of the increasing process (S101: NO), the ECU 56 proceeds to step S107. In step S107, the ECU 56 determines whether or not the conditions of the ASC downstream gas temperature Tasc being less than the NOx reproduction initiation temperature β and the exiting NOx amount RrNOx being less than or equal to the entering NOx amount FrNOx are both satisfied.

When an affirmative determination (YES) is given in step S107, the ECU 56 proceeds to step S108. In step S108, the increasing process execution flag is cleared to stop the increasing process. After the ECU 56 proceeds to step S106 and sets the final addition amount Qfin to the reference addition amount Qbase, the ECU 56 ends the present cycle of the routine.

When a negative determination (NO) is given in step S107, the ECU 56 proceeds to step S104. After the ECU 56 calculates the cooling increasing correction amount Qcm in step S104 and then sets the final addition amount Qfin in step S105, the ECU 56 ends the present cycle of the routine.

After ending the present cycle of the routine, the ECU 56 controls the urea adding valve 40 to add an amount of aqueous urea that corresponds to the final addition amount Qfin set in the routine. That is, the aqueous urea addition amount is determined based on the reference addition amount Qbase. The increasing process corrects the aqueous urea addition amount by increasing the final addition amount Qfin, which is determined from the reference addition amount Qbase, by the cooling increasing correction amount Qcm.

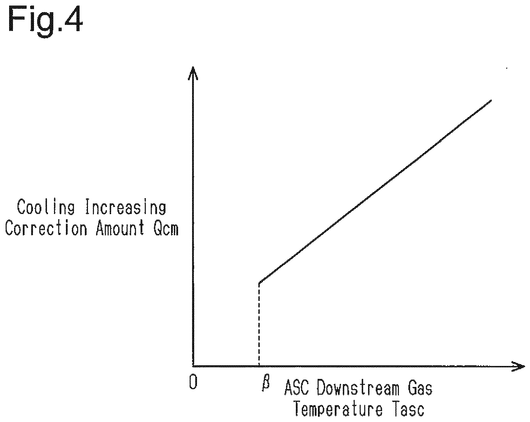

Fig. 4 shows the relationship of the cooling increasing correction amount Qcm, which is calculated in step S104, and the ASC downstream gas temperature Tasc. As shown in Fig. 4, the cooling increasing correction amount Qcm is set to be a larger value as the ASC downstream gas temperature Tasc increases after exceeding the reproduction NOx initiation temperature β.

The operation of the exhaust gas purification device in the present embodiment will now be described.

In the ASC unit 43, as long as NOx reproduction does not occur, the NOx in the exhaust gas passing through the urea SCR system decreases due to the reduction performed in the front SCR unit 41 and the rear SCR unit 42. The NOx does not increase. Thus, when the exiting NOx amount RrNOx from the ASC unit 43 is greater than the entering NOx amount FrNOx, NOx reproduction is most likely occurring.

In the exhaust gas purification device of the present embodiment, the aqueous urea addition amount is increased and corrected when the exiting NOx amount RrNOx is greater than the entering NOx amount FrNOx. When the aqueous urea addition amount is corrected and increased, vaporization of the aqueous urea in the exhaust gas increases the amount of heat that the aqueous urea receives from the exhaust gas and cools the exhaust gas. This limits the reproduction of NOx in the ASC unit 43 and limits increases in the amount of NOx that would be released into the ambient air when NOx reproduction occurs.

During the increasing process, as the amount of the aqueous urea that is increased and corrected increases, the ASC unit 43 is more effectively cooled. However, this increases the amount of ammonia released into the ambient air. In the exhaust gas purification device of the present embodiment, as the ASC downstream gas temperature Tasc becomes higher, the cooling increasing correction amount Qcm is set to a larger value and the increased correction amount of the aqueous urea addition amount is increased in the increasing process. This limits NOx reproduction and limits increases in the amount of the released ammonia.

In the exhaust gas purification device of the present embodiment, the increasing process stops increasing the aqueous urea addition amount when the ASC downstream gas temperature Tasc becomes less than the NOx reproduction initiation temperature β and, at the same time, the exiting NOx amount RrNOx becomes less than or equal to the entering NOx amount FrNOx. When the ASC bed temperature is less than the NOx reproduction initiation temperature β, NOx reproduction is limited. This reduces the amount of NOx that flows out of the ASC unit 43. Thus, when entering the above situation during the increasing process that increases the aqueous urea addition amount, it is most likely that NOx reproduction in the ASC unit 43 has been terminated. Under such a situation, the ECU 56 stops increasing the aqueous urea addition amount in the present embodiment. Thus, the aqueous urea addition amount is not continuously increased in an unnecessary manner after NOx reproduction becomes limited. This avoids a situation in which the released amount of ammonia continuously increases due to a continuous increase in the aqueous urea addition amount.

The exhaust gas purification device of the present embodiment has the advantages described below.
(1) The aqueous urea addition amount is increased to further cool the exhaust gas to which the aqueous urea is added. This cools the ASC bed temperature and limits the generation of reproduced NOx in the ASC unit 43.
(2) The aqueous urea addition amount is increased when the exiting NOx amount RrNOx is greater than the entering NOx amount FrNOx. The increasing process is not performed unless NOx reproduction is occurring. This limits unnecessary increases in the released amount of ammonia.
(3) When the conditions of the ASC downstream gas temperature Tasc being less than the NOx reproduction initiation temperature β and the exiting NOx amount RrNOx being less than or equal to the entering NOx amount FrNOx are both satisfied, the increasing of the aqueous urea addition amount in the increasing process is stopped. This limits increases in the released amount of ammonia that would otherwise occur when continuously increasing the aqueous urea addition amount after NOx reproduction is terminated.
(4) The final addition amount Qfin increased in the increasing process is determined after separately calculating the reference addition amount Qbase and the cooling increasing correction amount Qcm. This obtains the urea addition amount required to maintain the purification performance of the front SCR unit 41 and the rear SCR unit 42. Thus, the exhaust gas flowing into the ASC unit 43 can be cooled in a preferred manner, while maintaining the purification performance of the front SCR unit 41 and the rear SCR unit 42.
(5) The aqueous urea addition amount is corrected by a greater amount in the increasing process as the ASC downstream gas temperature Tasc rises. Thus, the ASC unit 43 can be cooled, while limiting unnecessary increases in the released amount of ammonia.

### Second Embodiment

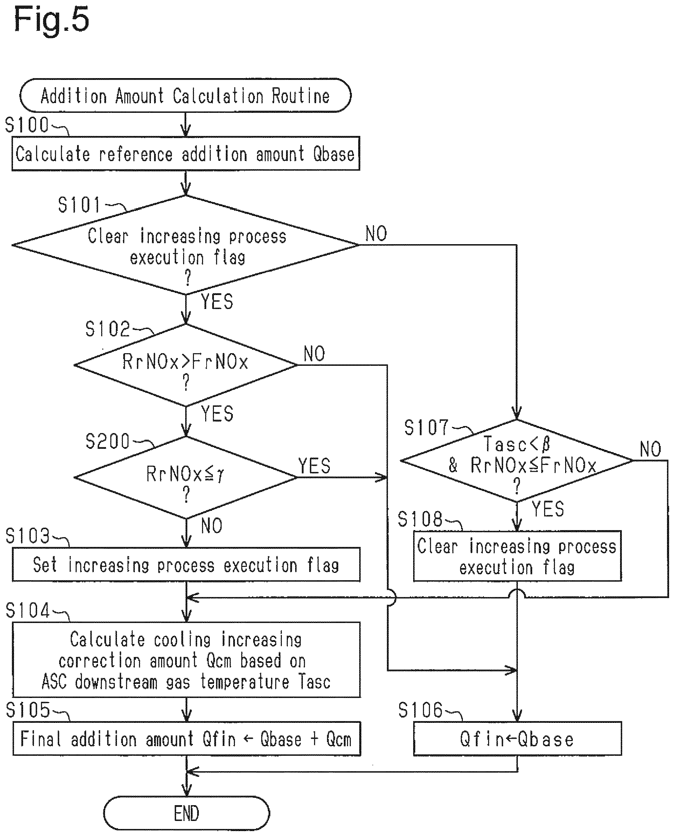

A second embodiment of the exhaust gas purification device will now be described with reference to Fig. 5. In the second embodiment and a third embodiment, which will be described later, same reference numerals are given to those components that are the same as the corresponding components of the first embodiment.

When the amount of NOx generated by the combustion in the cylinders 17 is small, the amount of NOx released into the ambient air is within a tolerable range even when NOx is reproduced by the ASC unit 43. In such a case, even when the reproduction of NOx is still not completely terminated, it is preferred that the increasing of the aqueous urea addition amount with the increasing process be stopped to limit increases in the released amount of ammonia. In the exhaust gas purification device of the present embodiment, when the exiting NOx amount RrNOx of the ASC unit 43 becomes less than or equal to a specified value during the execution of the increasing process that increases the aqueous urea addition amount, the ECU 56 stops increasing the aqueous urea addition amount.

Fig. 5 is a flowchart of an aqueous urea addition amount calculation routine executed by the ECU 56 to determine the amount of the aqueous urea that the urea adding valve 40 adds to the exhaust gas in the purification device of the present embodiment. In the exhaust gas purification device of the present embodiment, the ECU 56 executes the present routine instead of the aqueous urea addition amount calculation routine of the first embodiment shown in Fig. 3.

The present routine adds step S200 between step S102 and step S103 in the aqueous urea addition amount calculation routine of the first embodiment shown in Fig. 3. In step S102, when the ECU 56 determines that the exiting NOx amount RrNOx is greater than the entering NOx amount FrNOx (S102: YES), the ECU 56 proceeds to step S200 and determines whether or not the exiting NOx amount RrNOx is less than or equal to a specified value γ. The specified value γ is set to the tolerable upper limit value of the amount of NOx released to the ambient air. Thus, when the exiting NOx amount RrNOx is less than or equal to the specified value γ, the amount of NOx released into the ambient air is limited to within the tolerable range even when NOx is reproduced by the ASC unit 43.

When the exiting NOx amount RrNOx is greater than the specified value γ (S200: NO), the ECU 56 proceeds to step S103. In this case, after the increasing process execution flag is set in step S103, the aqueous urea addition amount is increased to cool the ASC unit 43 in steps S104 and S105.

When the exiting NOx amount RrNOx is less than or equal to the specified value γ (S200: YES), the ECU 56 proceeds to step S106 and sets the reference addition amount Qbase to the final addition amount Qfin. In this case, the ECU 56 does not increase the aqueous urea addition amount since the ASC unit 43 does not have to be cooled.

The exhaust gas purification device of the present embodiment also obtains advantages (1) to (5) of the first embodiment. Further, in the exhaust gas purification device of the present embodiment, the aqueous urea addition amount is not increased as long as the amount of NOx released into the ambient air is within the tolerable range even when the ASC unit 43 is most likely reproducing NOx. This further limits increases in the released amount of ammonia.

### Third Embodiment

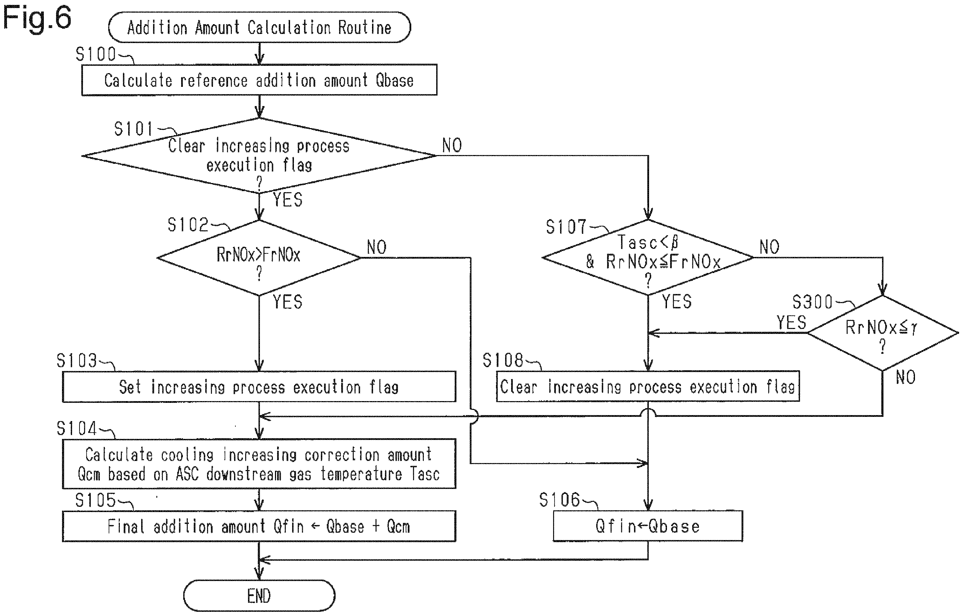

A third embodiment of an exhaust gas purification device will now be described with reference to Fig. 6. In the same manner as the second embodiment, the exhaust gas purification device of the present embodiment stops increasing the aqueous urea addition amount if the exiting NOx amount RrNOx becomes less than or equal to a specified value when the aqueous urea addition amount is being increased.

Fig. 6 is a flowchart of an aqueous urea addition amount calculation routine executed by the ECU 56 to determine the amount of the aqueous urea that the urea adding valve 40 adds to the exhaust gas in the purification device of the present embodiment. In the exhaust gas purification device of the present embodiment, the ECU 56 executes the present routine instead of the aqueous urea addition amount calculation routine of the first embodiment shown in Fig. 3.

The present routine adds step S300 between step S107 and step S104 in the aqueous urea addition amount calculation routine of the first embodiment shown in Fig. 3. When the ECU 56 makes a negative determination (NO) in step S107, the ECU 56 proceeds to step S300. More specifically, the ECU 56 proceeds to step S300 when determining that the ASC downstream gas temperature Tasc is greater than or equal to the NOx reproduction initiation temperature β or the reproduction of NOx has not been terminated in the ASC unit 43 since the exiting NOx amount RrNOx is greater than the entering NOx amount FrNOx.

In step S300, the ECU 56 determines whether or not the exiting NOx amount RrNOx is less than or equal to the specified value γ. When the exiting NOx amount is greater than the specified value γ (S300: NO), the ECU 56 proceeds to step S104. In steps S104 and S105, the ECU 56 performs a process for increasing the aqueous urea addition amount to cool the ASC unit 43.

When the exiting NOx amount RrNOx is less than or equal to the specified value γ (S300: YES), the ECU 56 proceeds to step S108. In step S108, the ECU 56 clears the increasing process execution flag. Then, in step S106, the ECU 56 sets the final addition amount Qfin to the reference addition amount Qbase.

The exhaust gas purification device of the present embodiment also obtains advantages (1) to (5) of the first embodiment. Further, in the exhaust gas purification device of the present embodiment, the aqueous urea addition amount is not increased as long as the amount of NOx released into the ambient air is within the tolerable range even when the ASC unit 43 is most likely reproducing NOx. Further, when the ECU 56 determines that NOx reproduction has still not been terminated in the ASC unit 43 during the execution of the process for increasing the aqueous urea addition amount to cool the ASC unit 43, as long as the NOx released into the ambient air is within the tolerable range, the ECU 56 does not increase the aqueous urea addition amount. This further limits increases in the amount of released ammonia.

The above embodiments may be modified as described below.

In each of the above embodiments, the ECU 56 stops increasing the aqueous urea addition amount in the increasing process when condition (A), which is the ASC downstream gas temperature Tasc being less than the reproduction NOx initiation temperature β, and condition (B), which is the exiting NOx amount RrNOx being less than or equal to the entering NOx amount FrNOx, are both satisfied. However, the ECU 56 may stop increasing the aqueous urea addition when either one of condition (A) and condition (B) is satisfied. Further, satisfaction of condition (A) may be the only condition for stopping the increase of the aqueous urea addition amount. Alternatively, satisfaction of condition (B) may be the only condition for stopping the increase of the aqueous urea addition amount.

In each of the above embodiments, the cooling increasing correction amount Qcm is set based on the detection result of the ASC downstream gas temperature Tasc to increase the correction amount as the ASC downstream gas temperature Tasc becomes higher. Instead, the cooling increasing correction amount Qcm may be set to, for example, a fixed value.

In each of the above embodiments, the ECU 56 separately calculating the reference addition amount Qbase and the cooling increasing correction amount Qcm and then uses the cooling increasing correction amount Qcm when setting the final addition amount Qfin, which is based on the reference addition amount Qbase, to increase and correct the aqueous urea addition amount in the increasing process. The aqueous urea addition amount may be obtained through other processes when increased during the increasing process.

In each of the above embodiments, the SCR upstream NOx sensor 50 detects and obtains the entering NOx amount FrNOx. However, the entering NOx amount may be estimated from the operation conditions of the diesel engine.

In addition to the urea SCR system, the exhaust gas purification device of each of the above embodiments includes the DPF system. However, the control of the aqueous urea addition amount in each of the above embodiments may be applied in the same manner to an exhaust gas purification device that does not include the DPF system.

In each of the above embodiments, a solution other than aqueous urea may be used as the solution of the precursor of ammonia added to the exhaust gas.

## Claims

1. An exhaust gas purification device including an adding valve (40) that is located in an exhaust passage (19) of an internal combustion engine and adds a solution of a precursor of ammonia to exhaust gas, a selective catalytic reduction unit (41, 42) that reduces nitrogen oxides in the exhaust gas using ammonia generated from the solution as a reducing agent, an oxidation catalytic unit (43) that oxidizes the ammonia exiting the selective catalytic reduction unit (41, 42), and an addition amount control unit (56) configured to control an addition amount of the solution of the adding valve (40) wherein the adding valve (40), the selective catalytic reduction unit (41, 42), and the oxidation catalytic unit (43) are arranged in this order from an upstream side of the exhaust passage (19), the exhaust gas purification device **characterized in that**:
the amount of nitrogen oxides in the exhaust gas entering the selective catalytic reduction unit (41, 42) is referred to as an entering NOx amount;
the amount of nitrogen oxides exiting the oxidation catalytic unit (43) is referred to as an exiting NOx amount; and
the addition amount control unit (56) is configured so that when the exiting NOx amount of the oxidation catalytic unit (43) is greater than the entering NOx amount of the selective catalytic reduction unit (41, 42), the addition amount control unit (56) executes an increasing process that increases the addition amount of the solution as compared with when the exiting NOx amount of the oxidation catalytic unit (43) is less than or equal to the entering NOx amount of the selective catalytic reduction unit (41, 42).

2. The exhaust gas purification device according to claim 1, **characterized in that**:
the exhaust gas flowing out of the oxidation catalytic unit (43) has a temperature referred to as a downstream gas temperature of the oxidation catalytic unit (43);
the downstream gas temperature of the oxidation catalytic unit (43) has an upper limit value at which the amount of nitride oxides generated from ammonia in the oxidation catalytic unit (43) is less than or equal to a specified value, and the upper limit value is referred to as a NOx reproduction initiation temperature; and
the addition amount control unit (56) is configured to stop the increasing process when the downstream gas temperature of the oxidation catalytic unit (43) becomes less than the NOx reproduction initiation temperature during the execution of the increasing process.

3. The exhaust gas purification device according to claim 2, **characterized in that** the addition amount control unit (56) is configured to stop the increasing process when the exiting NOx amount of the oxidation catalytic unit (43) becomes less than or equal to the specified value during the execution of the increasing process.

4. The exhaust gas purification device according to claim 1, **characterized in that**:
the exhaust gas flowing out of the oxidation catalytic unit (43) has a temperature referred to as a downstream gas temperature of the oxidation catalytic unit (43);
the downstream gas temperature of the oxidation catalytic unit (43) has an upper limit value at which the amount of nitride oxides generated from ammonia in the oxidation catalytic unit (43) is less than or equal to a specified value, and the upper limit value is referred to as a NOx reproduction initiation temperature; and
the addition amount control unit (56) is configured to stop the increasing process when the exiting NOx amount of the selective catalytic reduction unit (41, 42) becomes less than or equal to the specified value during the execution of the increasing process.

5. The exhaust gas purification device according to any one of claims 1 to 4, **characterized in that** the addition amount control unit (56) is configured to stop the increasing process when the exiting NOx amount of the oxidation catalytic unit (43) becomes less than or equal to the entering NOx amount of the selective catalytic reduction unit (41, 42) during the execution of the increasing process.

6. The exhaust gas purification device according to any one of claims 1 to 5, **characterized in that**:
the addition amount control unit (56) calculates a reference addition amount in accordance with an ammonia adsorption capacity of the selective catalytic reduction unit (41, 42) and determines the addition amount based on the reference addition amount; and
the addition amount control unit (56) increases and corrects the addition amount, which has been determined based on the reference addition amount, to cool the oxidation catalytic unit (43) during the execution of the increasing process.

7. The exhaust gas purification device according to claim 6, **characterized in that** the addition amount control unit (56) is configured to increase the increased and corrected amount of the addition amount as the temperature of the exhaust gas flowing out of the oxidation catalytic unit (43) becomes higher.

## Patentansprüche

1. Eine Abgasreinigungsvorrichtung, die ein Zuführventil (40), das in einem Abgaskanal (19) einer Brennkraftmaschine angeordnet ist und eine Lösung eines Vorproduktes von Ammoniak dem Abgas zuführt, eine auswählende katalytische Reduktionseinheit (41, 42), die Stickstoffoxide in dem Abgas unter Verwendung von Ammoniak, das aus der Lösung erzeugt wird, als ein Reduziermittel reduziert, eine katalytische Oxidationseinheit (43), die das Ammoniak oxidiert, das aus der selektiven katalytische Reduziereinheit (41, 42) austritt, und eine Zuführmengen-Steuereinheit (56), die konfiguriert ist, um eine Zuführmenge der Lösung des Zuführventils (40) zu steuern, aufweist, wobei das Zuführventil (40), die selektive katalytische Reduziereinheit (41, 42) und die katalytische Oxidationseinheit (43) in dieser Reihenfolge von einer Stromaufseite des Abgaskanals (19) angeordnet sind, wobei die Abgasreinigungsvorrichtung **dadurch gekennzeichnet ist, dass**:
sich auf die Menge an Stickstoffoxiden in dem Abgas, das in die selektive katalytische Reduziereinheit (41, 42) eintritt, als eine eintretende NOx-Menge bezogen wird,
sich auf die Menge an Stickstoffoxiden, die aus der katalytischen Oxidationseinheit (43) austritt, als eine austretende NOx-Menge bezogen wird, und
die Zuführmengensteuereinheit (56) konfiguriert ist, so dass, wenn die austretende NOx-Menge der katalytischen Oxidationseinheit (43) größer als die eintretende NOx-Menge der selektiven katalytischen Reduktionseinheit (41, 42) ist, die Zuführmengensteuereinheit (56) einen Erhöhungsprozess ausführt, der die Zuführmenge der Lösung im Vergleich damit erhöht, wenn die austretende NOx-Menge der katalytischen Oxidationseinheit (43) kleiner als die eintretende NOx-Menge der selektiven katalytischen Reduktionseinheit (41, 42) oder gleich dieser ist.

2. Abgasreinigungsvorrichtung nach Anspruch 1, die **dadurch gekennzeichnet ist, dass**
das Abgas, das aus der katalytischen Oxidationseinheit (43) herausströmt, eine Temperatur hat, auf die sich als eine Stromabgastemperatur der katalytischen Oxidationseinheit (43) bezogen wird,
die Stromabgastemperatur der katalytischen Oxidationseinheit (43) einen oberen Grenzwert hat, bei dem die Menge an Nitridoxiden, die aus Ammoniak in der katalytischen Oxidationseinheit (43) erzeugt werden, kleiner als ein spezifizierter Wert oder gleich diesem ist und sich auf den oberen Grenzwert als eine NOx-Reproduktionsinitiierungstemperatur bezogen wird, und
die Zuführmengensteuereinheit (56) konfiguriert ist, um den Erhöhungsprozess zu stoppen, wenn die Stromabgastemperatur der katalytischen Oxidationseinheit (43) kleiner als die NOx-Reproduktionsinitiierungstemperatur während der Ausführung des Erhöhungsprozesses wird.

3. Abgasreinigungsvorrichtung nach Anspruch 2, **dadurch gekennzeichnet, dass** die Zuführmengensteuereinheit (56) konfiguriert ist, um den Erhöhungsprozess zu stoppen, wenn die austretende NOx-Menge der katalytischen Oxidationseinheit (43) weniger als der spezifizierte Wert oder gleich diesem während der Ausführung des Erhöhungsprozesses wird.

4. Abgasreinigungsvorrichtung nach Anspruch 1, **dadurch gekennzeichnet, dass** das Abgas, das aus der katalytischen Oxidationseinheit (43) strömt, eine Temperatur hat, auf die sich als eine Stromabgastemperatur der katalytischen Oxidationseinheit (43) bezogen wird,
wobei die Stromabgastemperatur der katalytischen Oxidationseinheit (43) einen oberen Grenzwert hat, bei dem die Menge an Nitridoxiden, die aus Ammoniak in der katalytischen Oxidationseinheit (43) erzeugt werden, niedriger als ein spezifizierter Wert oder gleich diesem ist und sich auf den oberen Grenzwert als eine NOx-Reproduktionsinitiierungstemperatur bezogen wird und
die Zuführmengensteuereinheit (56) konfiguriert ist, um den Erhöhungsprozess zu stoppen, wenn die austretende NOx-Menge der selektiven katalytischen Reduktionseinheit (41, 42) niedriger als der spezifizierte Wert oder gleich diesem während der Ausführung des Erhöhungsprozesses wird.

5. Abgasreinigungsvorrichtung nach einem der Ansprüche 1 bis 4, **dadurch gekennzeichnet, dass** die Zuführmengensteuereinheit (56) konfiguriert ist, um den Erhöhungsprozess zu stoppen, wenn die austretende NOx-Menge der katalytischen Oxidationseinheit (43) niedriger als die eintretende NOx-Menge der selektiven katalytischen Reduktionseinheit (41, 42) oder gleich dieser während der Ausführung des Erhöhungsprozesses wird.

6. Abgasreinigungsvorrichtung nach einem der Ansprüche 1 bis 5, **dadurch gekennzeichnet, dass**
die Zuführmengensteuereinheit (56) eine Referenzzuführmenge entsprechend einer Ammoniakadsorptionskapazität der selektiven katalytischen Reduktionseinheit (41, 42) berechnet und die Zuführmenge auf der Grundlage der Referenzzuführmenge bestimmt, und
die Zuführmengensteuereinheit (56) die Zuführmenge erhöht und korrigiert, die auf der Grundlage der Referenzzuführmenge bestimmt wurde, um die katalytische Oxidationseinheit (43) während der Ausführung des Erhöhungsprozesses zu kühlen.

7. Die Abgasreinigungsvorrichtung nach Anspruch 6, **dadurch gekennzeichnet, dass** die Zuführmengensteuereinheit (56) konfiguriert ist, um die erhöhte und korrigierte Menge der Zuführmenge zu erhöhen, wenn die Temperatur des Abgases, das aus der katalytischen Oxidationseinheit (43) herausströmt, höher wird.

## Revendications

1. Dispositif de purification de gaz d'échappement comprenant une vanne d'addition (40) qui est disposée dans un passage d'échappement (19) d'un moteur à combustion interne et ajoute une solution d'un précurseur d'ammoniac aux gaz d'échappement, une unité de réduction catalytique sélective (41, 42) qui réduit des oxydes d'azote dans les gaz d'échappement en utilisant l'ammoniac produit à partir de la solution comme un agent réducteur, une unité catalytique d'oxydation (43) qui oxyde l'ammoniac sortant de l'unité de réduction catalytique sélective (41, 42) et une unité de contrôle de quantité d'addition (56) configurée pour contrôler une quantité d'addition de la solution de la vanne d'addition (40) dans lequel la vanne d'addition (40), l'unité de réduction catalytique sélective (41, 42), et l'unité catalytique d'oxydation (43) sont disposées dans cet ordre à partir d'un côté amont du passage d'échappement (19), le dispositif de purification de gaz d'échappement **caractérisé en ce que** :
la quantité d'oxydes d'azote dans les gaz d'échappement entrant dans l'unité de réduction catalytique sélective (41, 42) est citée comme une quantité de NOx entrante ;
la quantité d'oxydes d'azote sortant de l'unité catalytique d'oxydation (43) est citée comme une quantité de NOx sortante ; et
l'unité de contrôle de quantité d'addition (56) est configurée de sorte que lorsque la quantité de NOx sortante de l'unité catalytique d'oxydation (43) est supérieure à la quantité de NOx entrante de l'unité de réduction catalytique sélective (41, 42), l'unité de contrôle de quantité d'addition (56) exécute un procédé d'augmentation qui augmente la quantité d'addition de la solution en comparaison avec lorsque la quantité de NOx sortante de l'unité catalytique d'oxydation (43) est inférieure ou égale à la quantité de NOx entrante de l'unité de réduction catalytique sélective (41, 42).

2. Dispositif de purification de gaz d'échappement selon la revendication 1, **caractérisé en ce que** :
les gaz d'échappement s'écoulant à l'extérieur de l'unité catalytique d'oxydation (43) présentent une température citée comme une température de gaz en aval de l'unité catalytique d'oxydation (43) ;
la température de gaz en aval de l'unité catalytique d'oxydation (43) présente une valeur limite supérieure à laquelle la quantité d'oxydes de nitrures produite à partir d'ammoniac dans l'unité catalytique d'oxydation (43) est inférieure ou égale à une valeur spécifiée, et la valeur limite supérieure est citée comme une température d'initiation de reproduction de NOx ; et
une unité de contrôle de quantité d'addition (56) est configurée pour interrompre le procédé d'augmentation lorsque la température de gaz en aval de l'unité catalytique d'oxydation (43) devient inférieure à la température d'initiation de reproduction de NOx pendant l'exécution du procédé d'augmentation.

3. Dispositif de purification de gaz d'échappement selon la revendication 2, **caractérisé en ce que** l'unité de contrôle de quantité d'addition (56) est configurée pour interrompre le procédé d'augmentation lorsque la quantité de NOx sortante de l'unité catalytique d'oxydation (43) devient inférieure ou égale à la valeur spécifiée pendant l'exécution du procédé d'augmentation.

4. Dispositif de purification de gaz d'échappement selon la revendication 1, **caractérisé en ce que** :
les gaz d'échappement s'écoulant à l'extérieur de l'unité catalytique d'oxydation (43) présentent une température citée comme une température de gaz en aval de l'unité catalytique d'oxydation (43) ;
la température de gaz en aval de l'unité catalytique d'oxydation (43) présente une valeur limite supérieure à laquelle la quantité d'oxydes de nitrures produite à partir d'ammoniac dans l'unité catalytique d'oxydation (43) est inférieure ou égale à une valeur spécifiée, et la valeur limite supérieure est citée comme une température d'initiation de reproduction de NOx ; et
l'unité de contrôle de quantité d'addition (56) est configurée pour interrompre le procédé d'augmentation lorsque la quantité de NOx sortante de l'unité de réduction catalytique sélective (41, 42) devient inférieure ou égale à la valeur spécifiée pendant l'exécution du procédé d'augmentation.

5. Dispositif de purification de gaz d'échappement selon l'une quelconque des revendications 1 à 4, **caractérisé en ce que** l'unité de contrôle de quantité d'addition (56) est configurée pour interrompre le procédé d'augmentation lorsque la quantité de NOx sortante de l'unité catalytique d'oxydation (43) devient inférieure ou égale à la quantité de NOx entrante de l'unité de réduction catalytique sélective (41, 42) pendant l'exécution du procédé d'augmentation.

6. Dispositif de purification de gaz d'échappement selon l'une quelconque des revendications 1 à 5, **caractérisé en ce que** :
l'unité de contrôle de quantité d'addition (56) calcule une quantité d'addition de référence selon une capacité d'adsorption d'ammoniac de l'unité de réduction catalytique sélective (41, 42) et détermine la quantité d'addition sur la base de la quantité d'addition de référence ; et
l'unité de contrôle de quantité d'addition (56) augmente et corrige la quantité d'addition, laquelle a été déterminée sur la base de la quantité d'addition de référence, pour refroidir l'unité catalytique d'oxydation (43) pendant l'exécution du procédé d'augmentation.

7. Dispositif de purification de gaz d'échappement selon la revendication 6, **caractérisé en ce que** l'unité de contrôle de quantité d'addition (56) est configurée pour augmenter la quantité augmentée et corrigée de la quantité d'addition lorsque la température des gaz d'échappement s'écoulant à l'extérieur de l'unité catalytique d'oxydation (43) devient plus élevée.
